(19) Europäisches Patentamt
European Patent Office
Office européen des brevets

(11) Publication number: 0 112 956 B1

# (12) EUROPEAN PATENT SPECIFICATION

(45) Date of publication of patent specification: 16.12.87

(51) Int. Cl.[4]: B 01 J 37/02, C 10 G 11/05

(21) Application number: 83100028.6

(22) Date of filing: 04.01.83

## (54) Process for the preparation of an RCC catalyst.

(43) Date of publication of application:
11.07.84 Bulletin 84/28

(45) Publication of the grant of the patent:
16.12.87 Bulletin 87/51

(84) Designated Contracting States:
AT BE DE FR GB IT NL SE

(56) References cited:
EP-A-0 083 163
GB-A-1 184 453
US-A-3 629 152
US-A-3 867 308
US-A-3 944 482
US-A-3 957 689
US-A-3 972 835
US-A-4 107 088
US-A-4 125 591
US-A-4 198 320
US-A-4 253 989
US-A-4 257 874
US-A-4 283 309

(73) Proprietor: ASHLAND OIL, INC.
P.O. Box 391
Ashland, KY 41101 (US)

(72) Inventor: Hettinger, William P., Jr.
203 Meadowlark Road
Russell Kentucky 41169 (US)
Inventor: Beck, Hubert W.
1053 Brentwood Drive
Russell Kentucky 41169 (US)

(74) Representative: Lambert, Hugh Richmond
D. YOUNG & CO. 10 Staple Inn
London, WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 112 956 B1

Courier Press, Leamington Spa, England.

**Description**

This invention relates to the preparation of hydrocarbon conversion catalysts suitable for converting carbo-metallic oil containing hydrocarbons such as reduced crudes, residual oils, topped crudes and high boiling hydrocarbons such as vacuum gas oils boiling above about 650°F (343°C) and comprising residue material boiling in excess of 1025°F (552°C), to low boiling transportation fuels.

The catalysts utilized in conventional gas oil fluid catalytic cracking (FCC) operations are tailored and prepared with less than 20 wt% zeolite for use other than in high carbon and metals depositions reduced crude cracking operations. The fact that these known catalysts may be used to crack residual oils and reduced crudes in a marginal short time operation does not mean they are economically suitable for processing liquid carbo-metallic oil contributing materials such as asphaltenes, polynuclear aromatics, polar molecules, naphthenes and porphyrins found in the residue of vacuum distillation and boiling above 1025°F (552°C) or more usually above 1050°F (566°C). Generally, a conventional gas oil FCC system employs a catalyst of relatively low crystalline zeolite content less than 20 wt% (10—15 wt%) which has a relatively low hydrothermal stability due to a low silica to alumina ratio zeolite; comprises a high cerium to lanthanum ratio exchanged crystalline zeolite dispersed in a matrix material of low pore volume usually not above about 0.22 cc/gm; and comprises a pore size opening of less than 500 angstroms (50 µm). Generally, the matrix is merely a binder material of little or no acidic cracking activity.

However, the use of conventional low zeolite FCC conversion of high boiling, heavy hydrocarbons, such as reduced crudes, which are high in metal contaminants and Conradson carbon-producing values, leads to rapid catalyst deactivation by those metals and high carbon deposits, which can be corrected only by using very high catalyst replacement rates contributing to a highly unattractive economic operation. In addition the activity of the catalyst is affected by the large amount of heavy high boiling hydrocarbons in reduced crudes that are not vaporized and rapidly coat the catalyst particles with tacky liquid material also causing particle coalescence and agglomeration because of materials such as asphaltenes in the feed. Furthermore, the sorbed heavy hydrocarbons contribute to pore blockage, both in the matrix, and especially zeolite pores, and aggravate diffusion problems because of low pore volume, and effect acid site neutralization by adsorption of basic nitrogen compounds in the high boiling reduced crude feed.

In consequence new and improved catalyst compositions, and new and improved techniques have been evolved for reduced crude conversion (RCC) processes in which reduced crudes and other heavy hydrocarbons high in metal contamination and high in Conradson carbon-producing values are used as feedstocks.

For example, in EP—A—0 083 163 an improved catalyst is disclosed for RCC operations and which comprises a rare earth exchanged crystalline zeolite having an $SiO_2$:$Al_2O_3$ ratio greater than 4.5:1, a lanthanum:cerium ratio of at least 1:1 and a sodium content not exceeding 0.25% based on the total catalyst weight, dispersed in a porous matrix comprising a mixture of clay and a refractory metal oxide, e.g. silica or alumina or a combination of the two, the matrix having a pore volume of at least 0.2 cc/g and an average pore size of at least 500 Angstroms (50 µm).

In EP—A—0 083 163 a method of preparing such catalysts is disclosed which comprises forming a slurry or gel comprising the matrix materials, i.e. the clay and the refractory metal oxide, adding to that slurry or gel a slurry containing the separately prepared rare earth exchanged crystalline zeolite, and spray drying the mixture thus formed. An alternative approach, which is not so relevant, so far as the present invention is concerned, is to form the zeolite *in situ* in the matrix before spray drying.

In using such catalysts, and indeed other zeolite containing catalysts, in RCC operations, it is conventional to regenerate spent catalyst by contacting the spent catalyst particles in a separate catalyst regeneration zone with an upwardly flowing stream of hot catalyst regeneration gas, e.g. flue gas. Such contact is effected by passing the hot catalyste regeneration gas upwardly through a densely packed fluidized bed of spent catalyst particles withdrawn from the catalytic conversion zone of the RCC column, and thereby to form above the densely packed fluidized bed, a dilute catalyst phase containing regenerated catalyst particles suspended in the upwardly flowing hot regeneration gases, and from which phase the regenerated catalyst particles are subsequently recovered for recycle to the reduced crude conversion zone.

In accordance with the present invention, the excess heat in this dilute phase of the catalyst regeneration unit is used to spray dry the initial catalyst slurry, thus producing the spray dried catalyst particles *in situ* in the regeneration zone of the RCC or other heavy hydrocarbon conversion process.

In other words, the high temperature of the dilute catalyst phase in the catalyst regeneration zone of an RCC or similar process is relied upon to dry the sprayed microspherical catalyst particles for in situ preparation of the catalyst in the presence of regeneration combustion product flue gases, which carry away formed steam from the mass of catalyst particles therein, including those undergoing regeneration as well as the freshly introduced particles. In the high temperature environment of the disperse phase with temperatures in the range 1200°F to 1400°F (649°C to 760°C) the sprayed slurry forms microspherical particles and formed steam is removed before causing hydrothermal degradation of the mass of dense phase catalyst particles being regenerated. In this manner excess heat from regeneration can be economically utilized to further reduce the cost of catalyst preparation. It will be recognized by those skilled in the art that the homogenized slurry may be considerably thickened during homogenization thereof and sprayed into the dilute catalyst phase. The dispersed catalyst phase temperature will be reduced and generally below CO combustion temperatures therein should they exist. This new and novel combination technique of forming spray dried catalyst particles can be used to some considerable advantage, particularly when incorporating carbon black in the homogenized slurry mix to form a large pore distribution in the catalyst particle above identified. Since the spray dried particle formed in the dispersed phase will be heated to a high temperature and will fall into the dense fluid bed of catalyst there below being regenerated, the added carbon black will be removed by combustion. This particular in situ catalyst preparation or novel operating technique of this invention offers considerable flexibility and economy to the combination of catalyst preparation. That is, the slurry components comprising the catalyst composition may be varied at will, if not daily; the catalyst may be prepared in situ as needed and the heat available in the dispersed catalyst phase of the regenerator is available for drying the sprayed material which combination contributes measurably to the economics of the operation particularly associated with catalyst preparation. Furthermore the refiner is now able to vary the composition of the catalyst particles as the oil feed varies. This flexibility in operation reduces catalyst costs, reduces capital investment and more particularly permits adjustment of catalyst composition and activity essentially at will to optimize conversion of a given oil charge. It is even visualized that microprocessor control can be utilized to vary catalyst composition daily. Other advantages to this operating technique will be recognized by those skilled in the art particularly when a given reduced crude conversion operation requires variation in catalyst replacement due to attrition and changes in catalyst replacement rates as metals accumulation increases to equilibrium status to achieve particularly desired results requiring changes in catalyst activity-selectivity characteristics.

In one aspect, therefore the present invention provides a method for the preparation of low sodium, high activity, microspherical catalyst particles for use in the catalytic conversion of high boiling heavy hydrocarbons high in metal contaminants and Conradson carbon-producing values, said catalyst particles comprising a rare earth exchanged crystalline zeolite dispersed in a porous matrix comprising a mixture of clay and a refractory metal oxide, and which method comprises forming two or more separate slurries each containing one or more of said zeolite, said clay and said refractory metal oxide, said slurries optionally containing other, optional, components which may be desired in the catalyst particles, mixing the separate slurries to form a single, final slurry containing all the desired ingredients, and spray drying said single slurry to form the desired microspherical catalyst particles, said slurries are all prepared from ingredients having a sodium content such that the spray dried particles produced from the final slurry have a residual sodium content of less than 0.25% by weight, wherein the final slurry is spray dried by spraying the slurry into the dilute catalyst phase of a catalyst regeneration unit in which the same or similar low sodium, high activity, microspherical catalyst particles are being regenerated after use in the catalytic conversion of a high boiling, heavy hydrocarbon high in metal contaminants and Conradson carbon-producing values and prior to the recycle thereof to the catalytic conversion process, by contacting the used catalyst particles in a separate regeneration zone with an upwardly flowing stream of hot regeneration gas.

In a second aspect of the invention, there is provided a process for the catalytic conversion of high boiling heavy hydrocarbons high in metal contaminants and Conradson carbon-producing values, which comprises contacting the hydrocarbon under hydrocarbon conversion conditions with a low sodium, high activity, hydrocarbon conversion catalyst comprising spray dried microspherical catalyst particles comprising a rare earth exchanged crystalline zeolite dispersed in a porous matrix comprising a mixture of clay and a refractory metal oxide, wherein the catalyst is introduced into the process by spraying into the dilute catalyst phase of a catalyst regeneration unit used to regenerate spent catalyst particles withdrawn from the hydrocarbon conversion process and contacted in a catalyst regeneration zone with an upwardly flowing stream of hot catalyst regeneration gas, and prior to recycle of the regenerated particles to the hydrocarbon conversion process, an aqueous slurry comprising said zeolite, said clay and said refractory metal oxide, and any other optional components which may be desired in the catalyst particles, thereby to produce said particles *in situ* in the catalyst regeneration unit by the spray drying of said slurry.

The preferred high activity metals tolerant catalysts prepared by the technique of this invention are special microspherical particle compositions of fluidizable particulate size in the range 20 to 200 microns size comprising a higher than normal percentage of high activity crystalline aluminosilicate of large pore size dimensions, ion exchanged to provide a lanthanum rich crystalline zeolite of low residual sodium, less than 0.25 wt% in the finished catalyst and preferably less than 0.1 wt% sodium oxide dispersed in a special matrix composition and comprising a clay which may provide some cracking activity with or without acidic modifiers dispersed in a silica or silica-alumina of geleceous or colloidal ancestry. The catalyst prepared by the technique of this invention generally has a pore volume greater than 0.22 cc/g and preferably at least about 0.32 cc/g. A catalyst particle with a pore volume of at least 0.4 cc/g is particularly desirable. The zeolite-clay mixture is prepared in combination with a binder material initially comprising one or more refractory metal oxides providing desired hardness in the final microspherical particle. The refractory metal oxide or oxides suitable for this purpose may be selected from the group consisting of silica, alumina, silica-alumina, silica-magnesia, silica-alumina-magnesia, silica-titania, silica-zirconia, titania, zirconia and mixtures and combinations thereof. The preferred catalysts are based on forming a silica sol (colloidal) matrix material by one or more processing routes including starting with a sodium silicate to form gelaceous or colloidal suspension with additions thereto as herein provided.

Zeolites or crystalline aluminosilicates (CAS) of acceptable pore dimensions and particle size suitable for the preparation of cracking catalyst composition usable according to this invention are micron size three dimensional structures containing a large number of uniform openings or cavities interconnected by smaller, relatively uniform holes or channels.

Some zeolites which may be used with varying degrees of success include mordenite, gmelinite, zeolite "L", ZSM 4, faujasite and dealuminized faujasite of at least 5.5/l silica to alumina ratio. A "Y" type crystalline faujasite is particularly preferred in preparing the catalyst of this invention. Some characteristics of these crystalline zeolite are as follows:

Summary of some zeolite pore sizes

| | Pore dimensions | Pore free area ($A^2$) | Si/Al Ratio |
|---|---|---|---|
| Faujasite | 7.4×7.4 | 55.0 | 2.8 |
| ZSM4 | 7.3×7.3 | 53.5 | 3.1 |
| "L" | 7.1×7.1 | 50.5 | 3.6 |
| Gmelinite | 7.0×7.0 | 49.0 | 2.5 |
| Mordenite | 6.7×7.0 | 46.8 | 6.0 |

The preferred zeolite for preparing the metals tolerant catalyst according to the technique of this invention is a catalytically active faujasite crystalline zeolite providing a silica to alumina ratio greater than 5 and which has been ion exchanged several times before and after calcination to include rare earths and particularly provide a lanthanum to cerium ratio of at least 1/1 and preferably at least 2/1:La/Ce or more. It is known that zeolite stability is directly proportioned to the lanthanum or neodymium content and inversely proportional to the cerium content. Thus in commercial applications, some lanthanum rich exchange solutions have been used for zeolite exchange. The faujasite type zeolites known as "X" and "Y" crystalline zeolites are regularly shaped, discrete particles generally of a particle size in the range of 0.05 to 10 microns, preferably less than 5 microns when synthetically prepared and used in the catalyst preparation concepts of this invention. The especially preferred zeolite is the "Y" type crystalline zeolite, and the higher the silica to alumina ratio, the better its stability. Generally speaking, the preferred "Y" zeolite will contain a silica-alumina ratio of 4.5 or greater, more usually one containing 5/1 silica to alumina ratio and preferably at least 5.5 to 1 silica to alumina molar ratio.

The zeolites are catalytically activated and stabilized by ion exchange to replace sodium to a desired low level with hydrogen and/or rare earth metal to provide a final catalyst particle composition comprising less than 0.25 wt% sodium oxide. The removal of sodium ions to a very low level and provision of a rare earth exchanged "Y" faujasite characterized as herein provided is much more stable than the hydrogen form of zeolite and this is particularly optimized by providing a high lanthanum content zeolite exchanged before and after calcination of a high silica content zeolite. In particular, when dealing with vanadia, a high lanthanum content crystalline zeolite of at least 7 wt% is especially desirable. These catalytically modified rare earth containing crystalline zeolites are highly active catalytic compositions and most usually required some further modification as by high temperature steaming and dilution in a support or matrix material to restrict the overall catalyst particle activity thereof within acceptable catalytic cracking limits.

In the prior art, catalyst compositions have been prepared so that the matrix comprises silica, alumina or mixtures thereof comprising at least 25 wt% alumina and more usually at least 50 wt% alumina. The matrix material is also known to comprise a clay in an amount of about 10 to 65 wt% of the finished catalyst. Clays such as kaolin, halloysite, montmorillonite and others have been used in the prior art. Also heat and chemically modified clays such as metakaolin and acid treated halloysite can be used. On the other hand, a colloidal dispersion of silica and/or alumina particles (10 to 10,000 A:l to 1000 µm) may be added to a preformed catalyst or catalyst gel to provide a catalyst composition of improved resistance to metal poisoning, as in U.S.—A—4,198,320. Furthermore, U.S.—A—3,944,482 proposes cracking of a high metals content hydrocarbon feedstock in the presence of a catalyst comprising from 1 to 40 wt% of a zeolite dispersed in a refractory metal oxide matrix providing a pore size distribution in the range of 50—100 Angstroms (5—10 µm). U.S.—A—3,972,835; US—A—3,957,689 and US—A—3,867,308 prepare catalysts by neutralizing silicates by adjusting their pH and then adding clay and zeolites to form cracking catalyst.

The improved metal tolerant catalysts prepared by the technique of this invention are of a composition comprising at least 35 wt% and more usually about 40 wt% of a select lanthanum rich crystalline zeolite of small particle size in the range of about 0.05 to 5 microns particle size dispersed in a gel or colloidal suspension of silica, alumina or a combination thereof to form a matrix material providing desired intimacy of admixture with the small particles of the select crystalline zeolite herein identified. Preferably a kaolinite clay characterized by a small particle size of about 1 micron size, more or less and providing a pore volume in the catalyst particle complex in excess of .30 cc/g. It is preferred that the pore volume be at least 0.32 cc/g and more desirably in the range of 0.4 to 0.8 cc/g.

In one particular aspect of this invention microspherical catalyst particles prepared by the technique of this invention are observed to include hollow shell particles some of which include at least one large major passageway to the interior of the particle shell. Thus the catalyst composition prepared as herein provided appears to be substantially less diffusion limited and thus remains effective catalytically even with high levels of metal contaminant for a much extended operating period over that heretofore experienced.

It will be recognised by those skilled in the art that the catalyst compositions prepared by the technique of this invention are much more highly active catalytically than known prior art compositions because of the high concentration of a select rare earth rich crystallinic zeolite composition of about 40 weight percent dispersed in a select matrix material preferably colloidal as herein identified and providing a high pore volume preferably greater than 0.30 cc/g. That is, a high percentage of a lanthanum rich rare earth exchanged, high silica to alumina ratio CREY zeolite catalyst composition (calcined rare earth exchanged crystalline "Y" zeolite) of high hydrothermal stability is prepared and provided in a high pore volume select matrix material of colloidal ancestrary characterization. The catalyst composition comprises at least 40% of its pore openings being greater than 500 Angstroms (50 μm), and at least 25% greater than 1000 Angstroms (100 μm). This characterization statistically provides a catalyst particle composition comprising at least 6% and preferably at least 7% rare earths for more available active cracking sites even in the presence of high metals loading for converting high CRC (Conradson carbon) precursor hydrocarbon feed materials in contact therewith. The use of microspherical catalyst compositions comprising colloidal matrix components and prepared as herein provided is operationally enhanced in the cracking of catalytic hydrocarbon conversion operation by selecting catalyst to oil ratios sufficiently high which will exclude filling more than 2/3 but at least 1/4 to 1/2 of the catalyst particle pore volume with reactant oil feed material as herein identified.

The known literature and prior patent art, teach that metals, such as Ni, V, Fe, Cu and Na are deposited on a cracking catalyst when processing reduced crudes. These metals, particularly Na, are known to effect catalyst activity and selectivity. The prior art also teaches that nickel and to some degree vanadium are especially harmful with regard to producing coke and hydrogen, and thus the metal contaminant level is expressed in terms of nickel equivalents. This is evident from the following equations:

$$\text{Ni equivalents} = 4\ \text{Ni} + \text{V} + \text{Fe}$$

$$\text{Ni equivalents} = \text{Ni} + \text{V}/4 + \text{Fe}/5$$

In an investigation to identify catalyst compositions most suitable for converting reduced crudes in the presence of large amounts of metal, vanadia was identified as by far the most destructive of the metal contaminants, followed by sodium. Nickel appeared to be the least destructive. Vanadia, as vanadium pentoxide, causes irreversible destruction of the crystalline zeolite structure, rapidly producing a much lower activity material of or approaching amorphous nature. Sodium does lead to permanent neutralization of the zeolite acid cracking sites. Nickel leads primarily to temporary neutralization of the cracking sites by promoting dehydrogenation and deposition of the carbonaceous materials.

The catalyst compositions prepared by the technique of this invention may be employed in a variety of different procedures which permit low reactant residence time, e.g. less than 3 seconds and more usually in the range of 0.5 to 2 seconds, between a hydrocarbon feed, the vaporous conversion products and the catalyst particles and at temperatures providing desired catalytic hydrocarbon cracking or conversion to more useful products. The product vapors are recovered at a temperature within the range of 950°F to 1150°F (510°C to 621°C) but more usually not above about 1100°F (593°C). In cooperation with the hydrocarbon conversion operation is a regeneration system or operation designed to restrict catalyst regeneration time and temperatures below 1500°F (816°C) and more usually below 1400°F (760°C) so as to produce a recoverable CO rich flue gas. The catalyst regeneration operation is designed to provide a regenerated catalyst of low residual carbon content and preferably less than 0.1 wt%. In a more particular aspect it is preferred employing at least two stages of temperature restricted catalyst regeneration operations in combination with one or more catalyst stripping operations which will operate in conjunction with one another to reduce the exothermic temperature rise encountered during the removal of relatively large deposits of hydrocarbonaceous materials and some metal contaminants contributed by cracking reduced crudes. More particularly a two stage oxygen containing gas regeneration operation is contemplated or one stage thereof may be replaced by using $CO_2$ to remove hydrocarbonaceous component material in combination with a relatively high temperature stripping operation to remove hydrogen, sulfur and nitrogen. In this catalyst regeneration operation and sequence of temperature restricted contact steps, it is contemplated in one particular embodiment of relying upon high temperature $CO_2$ to remove some hydrogen and some carbonaceous deposits in one or more stages and such an operation may be intercepted by oxygen combustion removal of a portion of the deposited carbonaceous material by burning to produce a CO or $CO_2$ rich flue gas recovered from the operation. In any of these regeneration combinations it is particularly desirable to restrict the temperatures of oxygen combustion to relatively low levels, preferably below about 1450°F (788°C), which will provide recoverable CO rich or $CO_2$

rich flue gases. Removing hydrogen in hydrocarbonaceous deposits with $CO_2$ as well as carbon to produce recoverable CO improves measurably the overall heat balance of the combination operation and reduces potential temperature excursion changes to the catalyst under elevated temperature hydrothermal conditions.

The flexibility of this invention permits the preparation of catalysts incorporating the following features especially suitable for these catalysts utilized in reduced crude conversion. Ranges of special interest are indicated as follows:

1) Cracking activity—providing at least 20 wt% up to 45 wt% of a hydrogen or rare earth [exchanged before and/or after calcination of a] "Y" faujasite crystalline aluminosilicate or crystalline zeolite of high silica to alumina ratio at least equal to 4.5/1 and preferably greater than 5.0/1 silica-alumina molar ratio.

2) Cracking activity—preparing a final catalyst composition of low sodium content from low sodium ingredient material and comprising less than about 0.40 wt% sodium oxide and more preferably no more than about 0.25 wt% thereof.

3) Hydrothermal stability—improving the catalyst hydrothermal stability with either a hydrogen exchanged "Y" or a combination of rare earth exchanges to provide a high lanthanum to cerium ratio in excess of 1/1 in the catalyst composition and particularly the zeolite component thereof, and preferably greater than 3/1, and provide a catalyst particle composition comprising a rare earth oxide content of at least 3 wt% and preferably greater than 5 wt% rare earth oxides.

4) Diffusion and pore blockage—employing a matrix material composition comprising one or more components of colloidal ancestry or convertable to colloidal suspensions. Preferably the matrix is of a composition providing a substantial portion of its pore size openings comprising 40 or more percent thereof at least about 500 Angstroms (50 μm); at least 25% greater than 1000 Angstroms (100 μm) of sufficient large pore size openings so that the highest molecular weight components of the feed will be adsorbed without causing undesired pore blockage; so that diffusion problems associated with the escape of cracked material are minimized; and so that the deposits of metals in the large pores also do not cause substantial pore blockage or diffusion problems. Thus it is also contemplated employing different amounts of at least two different pore size providing colloidal suspensions of different particle size in forming the matrix composition of the catalyst particle composition. This variation in pore size openings as well as pore volume is used as a basis for varying particle porosity and attrition resistance properties of a spray dried microspherical catalyst particle composition. Thus, colloidal suspensions of different size silica colloid or alumina colloid or a combination thereof may be employed to achieve a binder matrix material for the zeolite component of desired porosity and hardness.

5) High boiling oil component absorption—the matrix material of the catalyst composition, whether acidic or neutral, is preferably of large pore volume greater than 0.30 cc/g and comprising substantial pore size openings of at least 500 Angstroms (50 μm) up to and including 1000 Angstroms (100 μm) so that the highest boiling components of a reduced crude feed not completely vaporized upon contact with freshly regenerated catalyst at temperatures up to 1350°F (732°C) can crack and a product of cracking enter the select zeolite pores for catalytic upgrading in preference to coating the catalyst particle surface and causing undesired particle agglomeration. It is also important to encourage condensation products of reduced crude cracking to deposit on the catalyst rather than parts of the apparatus employed and such deposition is particularly influenced by employing the catalyst to oil ratio herein defined in conjunction with the large pore size opening and pore volume defined. The catalyst compositions therefore are provided with a high pore volume preferably greater than 0.30 cc/g.

6) Matrix material—the matrix material of the catalyst compositions can be either relatively inert or active with respect to cracking activity. Preferably the matrix composition is an acidic acting material which will ensure that both thermal and catalytic cracking of absorbed and adsorbed high boiling hydrocarbon components are accomplished. Thermal or catalytic conversion of high molecular components to form lower molecular weight component materials which may be further converted under more selective crystalline zeolite cracking conditions in a reaction zone is an important aspect in the utilization of a lanthanum rich high zeolite content catalyst. Thus in reduced crude conversion the combination of high pore volume—large pore size when combined with catalytically active matrix material is relied upon in substantial measure to thermally and catalytically convert high molecular weight high boiling metallo-porphyrins and asphaltenes or Conradson carbon precursors so that metal components thereof are deposited preferably on the matrix surface rather than on the select crystalline zeolite component of the catalyst. In addition, the matrix acidity may be particularly desired to selectivity adsorb the basic heavy nitrogen compounds so that they also are restrained from entering the zeolite structure, whereby neutralizing the special zeolite cracking sites can be more desirably restrained over an extended period of use. The matrix material may be provided with added acidity by the addition of one or more materials such as sulfonates, phosphates, a halogen contributing material, phosphoric acid, boric acid, acid activated clay, silica-alumina, silica-titania, silica zirconia and other such acid contributing materials.

7) Matrix and metals control—one of the important functions of the catalyst composition is related to effecting a control on the metals deposited from cracking reduced crude containing portions of crude oils and comprising carbo-metallic components. As discussed herein, these carbo-metallic components comprising Conradson carbon contributors and deposited metals including particularly Ni, V, Fe and Na of which vanadium has been identified as contributing greater damage to the catalyst zeolite component than either sodium, iron or nickel with sodium being the second most damaging. Thus the matrix material, because of its provided pore volume and substantial pore size openings of at least 500 to 1000 Angstroms (50—100 μm), entraps metals and accumulates them to a much higher order of magnitude heretofore not possible with much lower pore volume matrix containing catalyst of the order of about 0.22 cc/gm. This metal entrapment provision of the catalysts prepared according to this invention is made even more effective by the employment of one or more vanadia immobilization materials which will complex therewith to form compositions which melt at a temperature above the temperature normally encountered in the catalyst regeneration operation in which employed. Thus the matrix material serves to trap deposited metals before they can reach and/or react with the catalytic zeolite structure or cause catalyst particle coalescence and agglomeration. Materials suitable for acting as a metals accumulator and vanadia immobilization agent particularly includes an alumina material incorporated in the matrix, a pillared interlayered clay material and selected metal additives which complex with vanadia to form higher melting mixtures than encountered during regeneration.

The above ranges of parameters are particularly suited to reduced crude conversion (RCC), but the invention is not limited to such ranges.

In addition to the ingredients already specified, other components may be included in the catalyst compositions, such as cheap filler and/or binder material as required. More importantly there may be incorporated a material which permits achievement of metals entrapment and enhancement of the desired pore size opening and volume structure in the manner above identified. Some materials suitable for this purpose include carbon black, high purity very fine kaolin clay, alumina and certain ball clays. In this regard an acid leached montmorillonite, bentonite, or halloysite are also possible candidates and can also serve to provide acidity in the matrix as well as being used as a binder material.

Advantages of using a colloid binder material

It is known from the literature that colloidal silica and colloidal alumina are stable dispersions of millimicron-sized particles in water or other suitable liquid medium. The tiny particles are generally spherical in shape and may be uniform or varied in size. Because the particles are so small their collective surface area is extremely large. This combination of particle size colloidal material and large surface area provides unique intimacy properties desired in the preparation of catalysts of this invention and make them commercially unique in a wide variety of applications as herein briefly discussed.

Colloidal particles represent a subdivision state between a course suspension and a truly dissolved one. Colloids exhibit properties more like the dispersing medium rather than the dispersed phase. Colloidal particle sizes are usually expressed in millimicrons (one-millionth of a millimeter) and a colloidal size range is between 1 and 1000 millimicrons. To more particularly identify potential intimacy with such materials, the small quantity of seven grams of silica sol (colloid) with a particle size of 5 μm have a surface area about equal to that of a football field.

The catalyst compositions prepared by the technique of this invention rely particularly upon the intimacy of contact between ingredients (Z-M-A) zeolite-matrix-additive identified herein and prepared as herein provided for the following reasons:

(1) The desirability of a catalyst preparation procedure of starting with low or no sodium component ingredients (Z—zeolite, PV—pore volume additive, C—clay filler, M—matrix material, A—metal additive, ZS—sacrificial sieve, B—binder, G—getter of the attached table and figure), allows one to simply mix suspensions or a slurry of the ingredients and spray dry to obtain useful catalyst particles. Thus it is now recognized that there is no need to go to the long drawn out steps and expense of washing, exchanging, drying and calcining formed spray dried solids to remove undesired levels of sodium. Thus, the simplified catalyst preparation methods contemplated by this particular invention eliminate substantial cost to a refiner and catalyst preparer as well the time, equipment and labor required for matrix preparation and catalyst component mixing, particle formation and optional treating steps associated therewith, and the costly post formation steps of rewetting dried particles, washing extensively and redrying for shipment. It even contemplates elimination of shipment, it being visualized that catalysts of highly valued industrial application can be manufactured at point of use. Also the invention eliminates the need of heating the catalyst preparation in order to control gel time. This method of preparation allows flexibility in variation of catalyst composition ingredients to optimize the variation in feedstock quality parameters such as metal content, Conradson carbon, amount of material boiling above 1025°F (552°C) and the like.

(2) The special catalyst preparation procedure associated with colloidal suspensions allows each starting component (Z-M-A) to be purchased or prepared individually and separately stored until use is required thus eliminating expensive gellation time, washings to remove sodium salts and complicated, time consuming treatments on the final spray dried catalyst microspheres. Further treatment of the spray dried microspheres may have some beneficial effects on some of the catalyst components thereof but they may also have some harmful results on other components of the catalyst composition. For example, if one exchanges the catalyst microspheres to put additional rare earths into the zeolite, one would also exchange and adsorb rare earths into any clays, sacrificial sieves, selective adsorbents, matrix acid sites which are present. Unless one intends to have these rare earth cations adsorbed in this manner, consumption and costs of these exchanged rare earths may be undesirably increased. However by starting with little or no sodium in individual catalyst ingredients or by first separately exchanging each ingredient Z-M-A of the catalyst composition for optimum Na removal, preferred exchange conditions may be provided for each component before ultimate mixing as by homogenization of the ingredients to form a slurry mix for spray drying following the varied catalyst preparation techniques of this invention.

(3) Excess electrolytes (mainly $Na^+$) are desirably removed from low sodium starting colloidal suspensions, so that higher pH's approaching a pH of 5.5 may be used for an acidic colloidal suspension without causing the colloids to gel. A colloidal suspension thus formed may be more concentrated, and can be mixed more vigorously in a homogenizer and/or even heated to a higher temperature without causing gellation to occur. The flexibility of the desired microspherical catalyst manufacturing process of this invention is thus greatly increased. The use of a pH between 3.5 and 5.5 will eliminate substantial acid destruction of the zeolite crystal structure normally found in other catalyst preparation procedures. Also of more significant importance is the recognition that the low electrolyte colloidal suspension is also more stable over an extended time against gelling or gel formation. The sols (colloidal suspensions) thus prepared can be made before time while quality control testing thereof is conducted or they can be purchased on the open market from a number of suppliers, thus eliminating all need for related manufacturing equipment. The ultimate financial value of such an approach is readily perceived by one skilled in the art. Thus a more uniform ultimate spray dried catalyst composition will result and can be relied upon or varied as desired between preparations.

(4) The particle size of the binding colloid may be preselected on an individual batch basis so that one can vary the physical properties of the final catalysts. Thus different amounts of two or more colloidal suspensions of the same or different average particle sizes and compositions may also be used to vary porosity, acidity and attrition of an ultimate catalyst composition prepared from the selected colloidal suspension.

(5) The catalysts prepared by the procedure and techniques of this invention from low sodium or no sodium colloids will have a desired very low sodium content so that any soluble sodium coming in contact with the special low sodium rare earth exchanged crystalline zeolite composition herein identified and particularly preferred will not be subjected to a back exchange of sodium into the zeolite.

(6) Since silica sols (colloids) are most stable in two ranges of pH on either side of about 5.5 to 7 pH, acidic in the range of 3.5 to 5.5 and basic sol in the range of 7 to 13 such colloidal suspensions may be used with considerable advantage. For example, this procedure permits preparation of catalysts on the high pH side as well, by replacing sodium or other poisonous and destructive cations with non-harmful cations such as ammonium ion; monomethyl, dimethyl, trimethyl and tetramethyl ammonium ions; and other organic bases of a similar nature. Since $NH_4^+$ or $H^+$ cations are used to stabilize such sols, some additional exchange of sodium out of a zeolite may be experienced in some selected cases. When employing catalyst compositions prepared from acidic sols some rare earths may be added to the spray dryer feed to achieve a final rare earth exchange even during the catalyst forming sequence.

(7) The catalyst preparation technique and method of this invention will allow one to use or incorporate $TiO_2$, $ZrO_2$, $Al_2O_3$, and $Sb_2O_3$ sols and gels for preparing carbo-metallic reduced crude conversion catalysts.

(8) The catalyst preparation technique also permits one to use metal oxide coated sols such as $TiO_2$, $ZrO_2$, $Re_2O_3$, $Cr_2O_3$, $Fe_2O_3$ or $Al_2O_3$ coating on a silica and/or alumina particle to prepare reduced crude conversion catalysts.

(9) The catalyst preparation technique of this invention also permits one to place relatively uniform coatings of the sol material on the clay and zeolite particles.

(10) Furthermore, it is also speculated that the higher surface area of the colloid used to prepare the matrix material will improve the rate of deposition and adsorption of metals from the hydrocarbon feed onto the colloid surface.

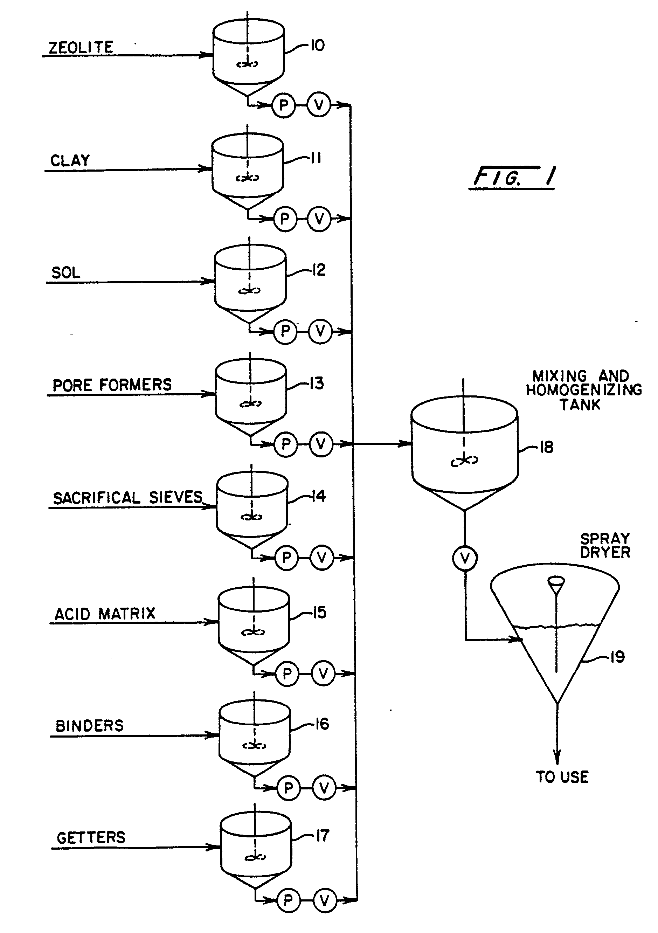

The technique of the present invention is illustrated by the accompanying drawing in which the single Figure is a schematic drawing of one embodiment of the process and apparatus of the invention. In Figure 1, a series of agitated mixing vessels 10—17 prepare various ingredients for feeding to mixing and homogenizing tank 18.

Zeolites: Zeolites purchased from any of the usual suppliers, e.g. Davison, Divison of W. R. Grace, Union Carbide Corporation, Philadelphia Quartz, or other suppliers, with the sodium having been substantially removed by ion exchange (with hydrogen, ammonium, or rare earths, etc.) is mixed with demineralized water to form a slurry which is transferred (through suitable pipes, valves, and instrumentation) into mixing and homogenizing tank 18. Suitable commercial zeolites include CREY, RECREY, Ultra-stable Y, HY, ZSM-5, high silica zeolite (HSZ) and others.

Clay: Clay obtained from any clay manufacturer is mixed with demineralized water and slurried in mixing tank 11 and thereafter transferred to mixing and homogenizing tank 18. Suitable clays include kaolin, halloysite, acid leached montmorillonite, synthetic montmorillonite and others. In most cases, the clays are shipped wet and require only minor amounts of additional water to form a pumpable slurry.

Sols: Low-sodium sols are mixed with demineralized water and slurried in mixing tank 12 and thereafter transferred to mixing and homogenizing tank 18. Suitable sols may be purchased from Nalco, Dupont and other manufacturers or the sols can be made by well-known techniques and washed with sodium-free acids (low pH) or ammonium or other bases (high pH) to remove sodium. Suitable sols include alumina, silica-alumina, titania, zirconia, antimony trioxide. These can be purchased sodium-free or purchased with sodium content which is removed by leaching tank 12.

Pore formers: In mixing vessel 13 a slurry is prepared comprising a pore former, preferably carbon black, selected to give the desired pore size to the matrix. The finished slurry is transferred to mixing and homogenizing tank 18.

Sacrificial sieves: Using demineralized water as before, an additional slurry is prepared in mixing vessel 14, comprising zeolites, for example those available commercially from the Davison, Division of W. R. Grace, PPG, Proctor & Gamble Company. Suitable zeolites include zeolite A, ZSM-5, mordenite, chabazite, co-gelled $SiO_2$-$Al_2O_3$ all suitably washed to remove sodium. The contents of tank 14 are, as with the other ingredients, transferred by suitable lines and pumps to mixing and homogenizing tank 18 for the preparation of the catalyst.

Acid matrix substances: In mixing tank 15, demineralized water is used to prepare slurries of acid matrix substances such as finely ground gels, e.g. silica gel, silica-alumina gel, titania-silica, etc. These acid matrix substances can be purchased from Davison or PPG as aforementioned. The finished acid matrix slurry is transferred to mixing and homogenizing tank 18, as above described for other slurries.

Binders: In mixing tank 16, demineralized water is used to form a slurry of acid leach bentonite, acid leached halloysite, pseudobeohmite, silicic acid, synthetic montmorillonite or other suitable catalyst binder well known to those skilled in the catalyst arts. The resulting slurry is transferred to mixing and homogenizing tank 18.

Getters: In tank 17, there are prepared slurries of demineralized water and suitable getters, e.g. compounds which will immobilize metals, e.g. vanadia and/or nickel, sodium or iron, by trapping the foregoing metals by reaction or association. Suitable getters include titania, alumina, zirconia, indium oxide, manganese dioxide, lanthanium oxide and others known to the art. These are slurried with demineralized water and fed to mixing and homogeneizing tank 18.

In each of the above discussions, by low-sodium is meant that the ingredient should have a sodium content after washing and at time of feeding to mixing and homogenizing tank 18 such that the aggregate sodium content of the mixture in tank 18 contains more than about 0.5 weight percent, or preferably 0.2 weight percent and most preferably below about 0.1 percent.

The mixing vessels, as with the plumbing and instrumentation, employed in the above schematic description of the inventions, may be of any suitable composition and configuration. The single mixing vessel may be used for successively producing a series of batches of the various ingredients. The process may be practiced continuously with flow mixers being employed in lieu of mixing vessels. Temperatures and pressures will not be narrowly critical and will be those which are convenient for the economic preparation of the desired pumpable slurries. The vessels may, in some instances, be compartments of a transport vehicle, e.g., a compartmented tank truck or rail car which prepared slurries can be shipped for custom blending at or near the point of use of the catalyst.

In fact, it is an important feature of the present invention that by stocking ingredients at or near the point of use, the usual delays involved in ordering and delivery of catalysts can be avoided and catalysts can be custom blended to optimize their compositions to accommodate variations in feedstock, e.g., those noted in a pipeline which is delivering successive batches of varying composition which would most desirably be converted by means of catalyst of different composition.

Of course, conversion operations for certain feedstocks and under certain conditions will permit the toleration of higher amounts of sodium and in such instances deionized water be substituted for demineralized water and higher sodium contents may be accepted in the mixing and homogenizing tank and in the final catalyst.

The percentage of each of the above ingredients will vary with the zeolite content being preferably in the range of about 10 to about 60, more preferably from about 15 to about 50 and most preferably from about 20 to about 40, the clay content being from about 0 to about 60, more preferably from about 0 to about 45, and most preferably from about 10 to about 35; the sol content being from about 0 to about 40, more preferably from about 10 to about 30, and most preferably from about 20 to about 25; the pore former content being from about 0 to about 25, more preferably from about 0 to about 20, and most preferably from about 0 to about 15 as measured on the volatile free finished catalyst; the sacrificial sieves content being from about 0 to about 20, more preferably from about 0 to about 15, and most preferably from about 0 to about 10; the acid matrix substance content from about 0 to about 50, more preferably from about 0 to 35, and most preferably from about 0 to about 20; the binders content being from about 0 to about 60, and, depending on the physical and temperature conditions which the finished catalyst must undergo, more preferably from about 0 to about 45, and most preferably from about 10 to about 35; and the getter content may be from about 0 to about 20, more preferably from about 0 to about 15, and most preferably from about 0 to about 10 percent by weight based on weight of the finished catalyst.

The composite of slurries will be thoroughly mixed and homogenized in tank 18 to obtain a highly uniform composition which is then transferred by suitable pumps, piping and instrumentation to spray drier 19 through suitable nozzles to form catalyst pellets of the required size. In practice, and in accordance with this invention, the final slurry from the homogenizer 18 will in fact be spray dried *in situ* by injecting it into one or more stages of the catalyst regeneration system of an RCC unit.

The high temperature of the dilute catalyst phase in the catalyst regeneration zone of an RCC or similar process is relied upon to dry the sprayed microspherical catalyst particles for in situ preparation of the catalyst in the presence of regeneration combustion product flue gases, which carry away formed steam from the mass of catalyst particles therein, including those undergoing regeneration as well as the freshly introduced particles. In the high temperature environment of the disperse phase with temperatures in the range 1200°F to 1400°F (649°C to 760°C) the sprayed slurry forms microspherical particles and formed steam is removed before causing hydrothermal degradation of the mass of dense phase catalyst particles being regenerated. In this manner excess heat from regeneration can be economically utilized to further reduce the cost of catalyst preparation.

In summary, the novel catalyst preparation proceudre of this invention is designed to considerably reduce the cost of catalysts used for processing carbo-metallic feedstocks. The procedure also considerably reduces the other above undesired impediments, derogatory results and particularly ensures obtaining a low cost, low sodium, high activity if desired, matrix material in combination with the special crystalline zeolite composition which characteristics are considered particularly desirable and more appropriately utilized when coupled with the other desirable catalyst ingredient and preparational features particularly identified above.

## Claims

1. A method for the preparation of low sodium, high activity, microspherical catalyst particles for use in the catalytic conversion of high boiling heavy hydrocarbons high in metal contaminants and Conradson carbon-producing values, said catalyst particles comprising a rare earth exchanged crystalline zeolite dispersed in a porous matrix comprising a mixture of clay and a refractory metal oxide, and which method comprises forming two or more separate slurries each containing one or more of said zeolite, said clay and said refractory metal oxide, said slurries optionally containing other, optional, components which may be desired in the catalyst particles, mixing the separate slurries to form a single, final slurry containing all the desired ingredients, and spray drying said single slurry to form the desired microspherical catalyst particles, said slurries being prepared from ingredients having a sodium content such that the spray dried particles produced from the final slurry have a residual sodium content of less than 0.25% by weight, characterised in that the final slurry is spray dried by spraying the slurry into the dilute catalyst phase of a catalyst regeneration unit in which the same or similar low sodium, high activity, microspherical catalyst particles are being regenerated after use in the catalytic conversion of a high boiling, heavy hydrocarbon high in metal contaminants and Conradson carbon-producing values and prior to the recycle thereof to the catalytic conversion process, by contacting the used catalyst particles in a separate regeneration zone with an upwardly flowing stream of hot regeneration gas.

2. A method according to claim 1, characterised in that the final slurry is obtained by preparing a first aqueous slurry containing particles of a calcined, rare earth exchanged crystalline Y zeolite having a lanthanum:cerium ratio of at least 2:1 in water, preparing a second aqueous slurry containing said clay and a colloidal refractory metal oxide, or a mixture of such oxides, and mixing the two slurries to obtain a homogeneous blend of said zeolite, said clay and said colloidal refractory metal oxide(s).

3. A method according to claim 2, characterised in that the clay is kaolin, kaolinite, metakaolin, ball clay, montmorillonite, bentonite, halloysite, an acid leached clay, or a mixture of two or more thereof.

4. A method according to claim 2 or 3, characterised in that the colloidal refractory metal oxide is colloidal silica or colloidal alumina, or a mixture of the two.

5. A method according to claim 2 or 3, characterised in that the colloidal refractory metal oxide is colloidal silica in admixture with one or more of the following: colloidal alumina, titania, magnesia, or zirconium.

6. A method according to any one of claims 1—5, characterised in that carbon black is added to one or more of said slurries to control the pore size of the spray dried catalyst particles.

7. A process for the catalytic conversion of high boiling heavy hydrocarbons high in metal contaminants and Conradson carbon-producing values, which comprises contacting the hydrocarbon under hydrocarbon conversion conditions with a low sodium, high activity, hydrocarbon conversion catalyst comprising spray dried microspherical catalyst particles comprising a rare earth exchanged crystalline zeolite dispersed in a porous matrix comprising a mixture of clay and a refractory metal oxide, characterised in that the catalyst is introduced into the process by spraying into the dilute catalyst phase of a catalyst regeneration unit used to regenerate spent catalyst particles withdrawn from the hydrocarbon conversion process and contacted in a catalyst regeneration zone with an upwardly flowing stream of hot catalyst regeneration gas, and prior to recycle of the regenerated particles to the hydrocarbon conversion process, an aqueous slurry comprising said zeolite, said clay and said refractory metal oxide, and any other optional components which may be desired in the catalyst particles, thereby to produce said particles *in situ* in the catalyst regeneration unit by the spray drying of said slurry.

8. A process according to claim 7, characterised in that said slurry is obtained by forming two or more separate slurries each containing one or more of said zeolite, said clay and said refractory metal oxide, and said optional components, if present, and mixing the separate slurries to form a single, final homogeneous slurry containing said zeolite, said clay, said refractory metal oxide, and said optional components, if present, prior to introducing said single slurry into the catalyst regeneration zone.

9. A process according to claim 8, characterised in that said slurry is, or is obtained in a manner as defined in any one of claims 2—6.

**Patentansprüche**

1. Verfahren zur Herstellung mikrokugelförmiger Katalysatorteilchen mit geringem Natriumgehalt und hoher Aktivität für die Verwendung bei der katalytischen Umwandlung hochsiedender schwerer Kohlenwasserstoffe mit starker Metallverunreinigung und hohen kohlenstofferzeugenden Conradson-Werten, wobei diese Katalysatorteilchen einen gegen Seltene Erden ausgetauschten kristallinen Zeolith aufweisen, der in einer porösen Matrix dispergiert ist, welche ein Gemisch von Ton und eines hitzebeständigen Metalloxids umfaßt, indem man zwei oder mehr getrennte Schlämme bildet, von denen jeder eine oder mehrere der Komponenten des Zeoliths, des Tons und des hitzebeständigen Metalloxids enthält, wobei diese Schlämme gegebenenfalls andere Komponenten enthalten, die in den Katalysatorteilchen erwünscht sein können, die getrennten Schlämme unter Bildung eines einzigen Endschlammes vermischt, der alle die erwünschten Bestandteile enthält, und diesen einzigen Schlamm unter Bildung der erwünschten mikrokugelförmigen Katalysatorteilchen sprühtrocknet, wobei die Schlämme aus Bestandteilen mit einem derartigen Natriumgehalt hergestellt werden, daß die aus dem Endschlamm erzeugten sprühgetrockneten Teilchen einen Restnatriumgehalt von weniger als 0,25 Gew.-% haben, dadurch gekennzeichnet, daß der Endschlamm durch Sprühen des Schlammes in die verdünnte Katalysatorphase einer Katalysatorregenerieranlage sprühgetrocknet wird, in welcher die gleichen oder ähnliche mikrokugelförmige Katalysatorteilchen mit niedrigem Natriumgehalt und hoher Aktivität nach der Verwendung in der katalytischen Umwandlung eines hochsiedenden schweren Kohlenwasserstoffes mit starker Metallverunreinigung und hohen kohlenstofferzeugenden Conradson-Werten und vor ihrer Rückführung zu dem katalytischen Umwandlungsverfahren regeneriert werden, indem man die verbrauchten Katalysatorteilchen in einer getrennten Regenerierzone mit einem aufwärtsfließenden Strom von heißem Regeneriergas behandelt.

2. Verfahren nach Anspruch 1, dadurch gekennzeichnet, daß der Endschlamm in der Weise erhalten wird, daß man einen ersten wäßrigen Schlamm herstellt, der Teilchen eines calcinierten, gegen Seltene Erden ausgetauschten kristallinen Zeolith Y mit einem Verhältnis von Lanthan zu Cer von wenigstens 2:1 in Wasser enthält, einen zweiten wäßrigen Schlamm herstellt, der den Ton und ein kolloidales hitzebeständiges Metalloxid oder ein Gemisch solcher Oxide enthält, und die beiden Schlämme vermischt und so ein homogenes Gemisch des Zeoliths, des Tons und des oder der kolloidalen hitzebeständigen Metalloxide bekommt.

3. Verfahren nach Anspruch 2, dadurch gekennzeichnet, daß der Ton Kaolin, Kaolinit, Metakaolin, Kugelton, Montmorillonit, Bentonit, Halloysit, ein mit Säure ausgelaugter Ton oder ein Gemisch zweier oder mehrerer derselben ist.

4. Verfahren nach Anspruch 2 oder 3, dadurch gekennzeichnet, daß das kolloidale hitzebeständige Metalloxid kolloidale Kieselsäure oder kolloidale Tonerde oder ein Gemisch der beiden ist.

5. Verfahren nach Anspruch 2 oder 3, dadurch gekennzeichnet, daß das kolloidale hitzebeständige Metalloxid kolloidale Kieselsäure im Gemisch mit einem oder mehreren der folgenden ist: kolloidales Aluminiumoxid, Titanoxid, Magnesiumoxid oder Zirkonoxid.

6. Verfahren nach einem der Ansprüche 1 bis 5, dadurch gekennzeichnet, daß Ruß zu einem oder mehreren der Schlämme zugesetzt wird, um die Porengröße der sprühgetrockneten Katalysatorteilchen zu steuern.

7. Verfahren zur katalytischen Umwandlung von hochsiedenden schweren Kohlenwasserstoffen mit starker Metallverunreinigung und hohen kohlenstofferzeugenden Conradson-Werten, bei dem man den Kohlenwasserstoff unter Kohlenwasserstoffumwandlungsbedingungen mit einem Kohlenwasserstoffumwandlungskatalysator mit niedrigem Natriumgehalt und hoher Aktivität behandelt, der sprühgetrocknete mikrokugelförmige Katalysatorteilchen umfaßt, die einen gegen Seltene Erden ausgetauschten kristallinen Zeolith aufweisen, der in einer porösen Matrix dispergiert ist, die ein Gemisch von Ton und eines hitzebeständigen Metalloxids umfaßt, dadurch gekennzeichnet, daß der Katalysator in das Verfahren eingeführt wird, indem man in die verdünnte Katalysatorphase einer Katalysatorregenerieranlage, die zur Regenerierung verbrauchter Katalysatorteilchen verwendet wird, die aus dem Kohlenwasserstoffumwandlungsverfahren abgezogen und in einer Katalysatorregenerierzone mit einem aufwärtsfließenden Strom von heißem Katalysatorregeneriergas behandelt werden, und vor der Rückführung der regenerierten Teilchen zu dem Kohlenwasserstoffumwandlungsverfahren einen wäßrigen Schlamm einsprüht, der den Zeolith, den Ton und das hitzebeständige Metalloxid und irgendwelche anderen Wahlkomponenten umfaßt, die in den Katalysatorteilchen erwünscht sein können, und so die Teilchen in situ in der Katalysatorregenerieranlage durch das Sprühtrocknen des Schlammes erzeugt.

8. Verfahren nach Anspruch 7, dadurch gekennzeichnet, daß der Schlamm erhalten wird, indem man zwei oder mehr getrennte Schlämme bildet, von denen jeder eine oder mehrere der Komponenten des Zeoliths, des Tons und des hitzebeständigen Metalloxids und die Wahlkomponenten, wenn vorhanden, enthält, und die getrennten Schlämme unter Bildung eines einzigen homogenen Endschlammes, der den Zeolith, den Ton, das hitzebeständige Metalloxid und die Wahlkomponenten, wenn vorhanden, enthält, vermischt, bevor man den einzigen Schlamm in die Katalysatorregenerierzone einführt.

9. Verfahren nach Anspruch 8, dadurch gekennzeichnet, daß der Schlamm wie nach einem der Ansprüche 2 bis 6 definiert ist oder in einer dort definierten Weise erhalten wird.

**Revendications**

1. Un procédé pour la préparation de particules microsphériques de catalyseur à haute activité et basse teneur en sodium utilisables dans la conversion catalytique d'hydrocarbures lourds à point d'ébullition élevé à forte teneur en contaminents métalliques et en indices de formation de carbone Conradson, lesdites particules de catalyseurs comprenant une zéolite cristalline à échange par terre rare dispersée dans une matrice poreuse comprenant un mélange d'argile et d'oxyde d'un métal réfractaire, ce procédé comprenant le fait de former deux bouillies distinctes ou davantage contenant chacune un ou plusieurs de ces zéolite, argile et oxyde de métal réfractaire, lesdites bouillies contenant facultativement d'autres composés facultatifs qui peuvent être souhaités dans les particules de catalyseur, le fait de mélanger les bouillies séparées pour former une boue finale unique contenant tous les ingrédients désirés, et de sécher par pulvérisation ladite bouille unique pour former les particules désirées microsphériques de catalyseur, lesdites bouillies étant préparées à partir d'ingrédients présentant une teneur en sodium telle que les particules séchées par pulvérisation produites à partir de la bouillie finale présente une teneur résiduelle en sodium inférieure à 0,25% en poids, caractérisé en ce que la bouillie finale est séchée par pulvérisation en pulvérisant la bouillie dans la phase diluée du catalyseur d'une unité de régénération de catalyseur dans laquelle les mêmes ou des particules semblables microcristallines de catalyseur à haute activité et basse teneur en sodium sont en voie de régénération après utilisation dans la conversion catalytique d'hydrocarbures lourds à point d'ébullition élevé riches en contaminents métalliques et en indices de formation de carbone Conradson et avant leur recyclage vers le processus de conversion catalytique, par mise en contact des particules de catalyseur usé dans une zone de régénération séparée avec un écoulement ascendant de gaz chaud de régénération.

2. Un procédé selon la revendication 1, caractérisé en ce que la bouillie finale est obtenue en préparant une première bouillie aqueuse contenant des particules d'une zéolite Y cristalline calcinée à échange par terre rare, présentant un rapport lanthane:cérium d'au moins 2:1 dans l'eau, en préparant une seconde bouillie aqueuse contenant ladite argile et un oxyde colloïdal de métal réfractire, ou un mélange de tels oxydes, en mélangeant les deux bouillies pour obtenir un mélange homogène de ces zéolite, argile et oxyde(s) colloïdal (aux) de métal réfractaire.

3. Un procédé selon la revendication 2, caractérisé en ce que l'argile est du kaolin, de la kaolinite, du métakaolin, de l'argile plastique, de la montmorillonite, de la bentonite, de l'halloysite, une argile lixiviée à l'acide, ou un mélange de deux de ceux-ci ou davantage.

4. Un procédé selon la revendication 2 ou 3, caractérisé en ce que l'oxyde colloïdal de métal réfractaire est une silice colloïdale ou une alumine colloïdale, ou un mélange des deux.

5. Un procédé selon la revendication 2 ou 3, caractérisé en ce que l'oxyde colloïdal de métal réfractaire est une silica colloïdale en mélange avec un ou plusieurs des composés suivantes: alumine, titane, magnésie ou zirconium colloïdal.

6. Un procédé selon l'une quelconque des revendications 1—5, caractérisé en ce que du noir de carbone est ajouté à une ou plusieurs desdites bouillies pour regler la dimension des pores des particules de catalyseur séchées par pulvérisation.

7. Un processus pour la conversion catalytique d'hydrocarbures lourds à point d'ébullition élevé riches en contaminants métalliques et en indices de formation de carbone Conradson, comprenant la mise en contact de l'hydrocarbure sous des conditions de conversion d'hydrocarbures avec un catalyseur de conversion d'hydrocarbures à haute activité et basse teneur en sodium comprenant des particules de catalyseur microsphériques séchées par pulvérisation comprenant une zéolite cristalline à échange par terre rare dispercées dans une matrice poreuse comprenant un mélange d'argile et d'oxyde d'un métal réfractaire, caractérisé en ce que le catalyseur est introduit dans le processus par pulvérisation dans la phase de catalyseur dilué d'une unité de régénération de catalyseur utilisée pour régénérer des particules de catalyseur usées retirées du processus de conversion d'hydrocarbures et mis en contact dans une zone de régénération de catalyseur avec un écoulement ascendant de gaz chauds de régénération de catalyseur, et avant de recycler les particules régénérées vers le processus de conversion d'hydrocarbures, une bouillie aqueuse comprenant ces zéolite, argile et oxyde de métal réfractaire, et tous autres composants facultatifs que l'on peut souhaiter dans les particules de catalyseur, de manière à produire ainsi lesdites particules in situ dans l'unité de régénération de catalyseur par séchage par pulvérisation de ladite bouillie.

8. Un processus selon la revendication 7, caractérisé en ce que ladite bouillie est obtenue en formant deux bouillies séparées ou davantage contenant chacune une ou plusieurs de ces zéolite, argile et oxyde de métal réfractaire, ainsi que lesdits éléments facultatifs, s'ils sont présents, et en mélangeant les bouillies séparées pour former une bouillie unique homogène finale contenant ces zéolite, argile, oxyde de métal réfractaire, ainsi que lesdits éléments facultatifs, s'ils sont présents, avant d'introduire ladite bouillie unique dans la zone de régénération du catalyseur.

9. Un processus selon la revendication 8, caractérisé en ce que ladite bouillie est, ou est obtenue d'une manière définie dans l'une quelconque des revendications 2—6.

ZEOLITE
10
P
V
CLAY
11
SOL
12
PORE FORMERS
13
SACRIFICAL SIEVES
14
ACID MATRIX
15
BINDERS
16
GETTERS
17
FIG. 1
MIXING AND
HOMOGENIZING
TANK
18
SPRAY
DRYER
19
TO USE